# EUROPEAN PATENT APPLICATION

(11) **EP 2 541 480 A1**
(43) Date of publication of application: **02.01.2013**
(21) Application number: 11171559.5
(22) Date of filing: 27.06.2011
(51) Int. Cl.: G06Q 30/00

(54) **A method and system for providing a service transaction for a mobile device**

(71) Applicant: Coupies GmbH, 50823 Köln (DE)
(72) Inventor: Gillen, Felix, 52066 Aachen (DE); Schleimer, Frank, 50937 Köln (DE); Engel, Thomas, 50999 Köln (DE); Schul, Felix, 50677 Köln (DE); Eisleben, Marc, 50937 Köln (DE)
(74) Representative: Isarpatent

(57) **Abstract**

A method for providing a service transaction for a mobile device (1) of a user (12) at a point of sale (POS) of a supplier, wherein
the method comprises the steps of sending (S2) by said mobile device (1) an individual supplier code (SC) read (S1) by said mobile device (1) from a supplier tag (6) located at the point of sale (POS) of said supplier to a server (10) of a service provider; returning (S5) a service valid message (SVM) by said server (10) of said service provider to the mobile device (1) if the supplier code (SC) belongs to a registered supplier of the respective service; and performing (S6) a service transaction of the respective service at the point of sale (POS) of the registered supplier in response to the service valid message (SVM) received by the mobile device (1).

## Description

A method and a system for providing a service transaction for a mobile device

The invention relates to a method and a system for providing a service transaction for a mobile device and in particular to a method and a system for providing a coupon redemption transaction.

Some service transactions require the physical presence of a user carrying a mobile device at a specific location. An example for such a service transaction is the redemption of an electronic coupon at a point of sale of a supplier or merchant.

The distribution of electronic coupons by means of cellular handheld telephones is for instance described in US 2009/0070207 A1. A server computing device comprises a server module which responds to a coupon request from a mobile device. The server module transmits a plurality of text based and image based electronic coupons to a client module. A coupon or display module displays the electronic coupons on a display of the mobile device. The system for providing electronic coupons as described in US 2009/0070207 A1 has as a drawback that is does not take into account the position of the user and the location of the suppliers which provide goods and services to the users and which accept such electronic coupons. Accordingly, users receive in such a conventional system a plurality of electronic coupons, which they in many cases can not redeem at a point of sale because the user has no information where he can redeem the respective electronic coupon.

Further, in US 2002/0065713 A1 coupon delivery via a mobile phone based on the location of the mobile phone has been proposed. In this conventional system a data base of merchants offering coupons is provided wherein the data base can be remotely accessed by users using a mobile device such as a mobile phone. If the user whishes to find out about coupons offered in the vicinity of their present location they can use their mobile phone to dial up the data base of merchant coupons and a server determines the location of merchants within the vicinity of the user and transmits electronic coupons to the user based on the user's location and selected preferences of the user. A supplier within a predefined range of the current position of the mobile device are selected from the data base and coupons redeemable with the selected merchants are then transmitted to the user which can download electronic coupons as WML (Wireless Markup Language) files using a wireless application protocol WAP. The electronic coupon can contain information data about how to redeem the coupons and contain information about a merchant or point of sale (POS) where the respective electronic coupon can be redeemed.

In this conventional coupon delivery system according to the state of the art as described in US 2002/00657613 A1 the user requests electronic coupons via a WAP link and receive electronic coupons in form of a list. In this conventional system a coupon distribution is performed as a service of the mobile phone provider which performs the localization of the respective user and provides the user with electronic coupons according to the user's preferences. A drawback of the conventional coupon delivery system as described in US 2002/0065713 A1 is that the coupon delivery service is offered by the mobile phone provider and not implemented as a provider independent application of the mobile device. A further drawback of the coupon delivery system is that the localization of the user is done by the mobile phone provider making it transparent where a user is performing his transactions such as giving a complete transaction profile of the user, i.e. indicating where and what a user is buying at what locations at any time.

Furthermore, the conventional coupon delivery systems does not allow for an efficient clearing process between an electronic coupon distributor and the plurality of point of sales. Clearing is a compensation between manufacturers and retailers which is necessary in many cases where retailers initiate a couponing campaign.

To overcome these disadvantages a system has been proposed in EP 101 550 22.6 for providing at least one electronic coupon for a user of a mobile device for goods and services. According to this system the electronic coupon is transmitted by an electronic coupon server to the mobile device depending on the position of the mobile device and locations of the point of sales of registered suppliers offering goods and services. The position of the mobile device is detected in this system by an application executed by a processing unit of the mobile device.

In a possible implementation of this system the user or consumer chooses an electronic coupon on the mobile device and clicks "redeem now" when paying for example at a cash desk located at the point of sale POS. The mobile device then sends contextual information to the electronic coupon's server of a service provider. This contextual information can comprise for example the current geographical position of the mobile device at the time, a consumer ID of the user as well as coupon ID. The electronic coupon server evaluates this contextual information by comparing the user's position to the actual position of the point of sale (POS). If the user or consumer is within a predetermined radius or range such as for example 300 meters to the actual point of sale (POS) the redemption of the coupon is counted as valid and can be billed to the supplier or merchant. In this way test-redemptions, which are not really connected to a purchase, can be filtered out to a certain extent. This coupon redemption process uses the mobile device as the feedback channel. Hence, no sophisticated system at the point of sale POS such as a bar-code scanner or an Internet connection is required for the merchant at the point of sale. However, this coupon redemption process still has drawbacks. In the conventional redemption process the mobile device must be capable of finding its own geographical position, for example by using GPS. If the position of the mobile device cannot be determined accurately enough, the coupon redemption cannot be evaluated as being valid and too few redemptions are counted. Further, if the user clicks "redeem now" and is close to a store or within a store but does not really do perform a purchase the redemption of the coupon is falsely marked as valid and too many redemptions are counted. Accordingly, the current coupon redemption process is heuristic as it can only estimate whether the redemption of a coupon is valid but can neither prove the consumers presence at the cash desk at the point of sale POS nor the individual redemption of an electronic coupon.

Accordingly, it is an object of the present invention to provide a method and a system for providing a service transaction for a mobile device of a user of a point of sale which overcomes the above mentioned drawbacks and monitors service transaction requiring a physical presence of the user at the point of sale accurately.

This object is achieved by a method comprising the features of claim 1.

The invention provides a method for providing a service transaction for a mobile device of a user at a point of sale of a supplier, the method comprising the steps of:
sending by said mobile device an individual supplier code read by said mobile device from a supplier tag located at the point of sale of said supplier to a server of a service provider,
returning a service valid message by said server of said service provider to said mobile device if the supplier code belongs to a registered supplier of the respective service, and
triggering a service transaction of the respective service at the point of sale of the registered supplier in response to the service valid message received by said mobile device.

In a possible embodiment of the method according to the present invention the service transaction is a service transaction which requires a physical presence of the user at the point of sale.

With the method according to the present invention the supplier tags are used to identify the point of sale, for example on a cash desk level and not to identify a product.

In a possible embodiment of the method according to the present invention the service transaction is a coupon redemption transaction requiring a physical presence of the user's mobile device at the respective point of sale (POS).

The method according to the present invention can be used in any use case which requires a user or an individual to accurately prove his or her presence at a specific physical location. For example, the method according to the present invention can also be used for a digital loyalty card system wherein a user gets a certain number of stamps or bonus points for a specific product or service.

The method according to the present invention does not require geographical location data or position data to identify the point of sale. Accordingly, in a possible embodiment of the present invention the mobile device must not be capable of finding its own geographical position. For example, the present invention also works when a mobile device cannot link to satellites, for example in cities with skyscrapers. Furthermore, the method according to the present invention does also work for mobile devices having no electronic unit for detecting its geographical position.

In a possible embodiment of the method according to the present invention the supplier tag comprises a passive tag being positioned at the physical location where the respective service transaction is performed.

In a possible embodiment of the method according to the present invention a passive tag is placed at the point of sale so that at the point of sale only a passive tag is provided and no reader must be attached to the cash system at the point of sale.

In the method according to the present invention reading of the supplier tag is done by the mobile device and not by a reader provided at the point of sale. Accordingly, the method according to the present invention does not require an additional technical infrastructure at the point of sale and can be used by any merchant, in particular also by merchants having to technical infrastructure at all, for example no Internet connection. The supplier or merchant does not even require a reading device capable of reading a passive supplier tag.

In a possible embodiment of the method according to the present invention the passive tag is formed by a sticker attached to a cash desk at the point of sale (POS).

This embodiment has the advantage that the attachment of the passive supplier tag is very easy to handle for the respective merchant.

In a possible embodiment of the method according to the present invention a passive tag comprises an integrated chip storing the supplier code and/or a bar-code representing said supplier code, wherein said bar-code is printed on said passive tag. The integrated chip can be a passive wireless chip such as a RFID or NFC chip.

This embodiment has the advantage that the method can also be performed by a mobile device not equipped with a unit for reading a supplier tag and which does comprise only a camera. Because almost all mobile devices are nowadays equipped with a camera capable to detect a bar code the method according to the present invention is applicable for almost any mobile device.

In a possible embodiment of the method according to the present invention the mobile device is moved by the user close to the passive tag to read the supplier code from the integrated chip of the passive tag located at the point of sale.

In a possible implementation the passive tag is a NFC tag having a working distance of less than 20 cm, for example a working distance of about 4 cm.

Because of this very limited working distance the physical presence of the user moving his mobile device to the passive tag being attached for example to a cash desk of a point of sale (POS) is guaranteed.

In a possible embodiment the mobile device is moved by the user close to the passive tag and a camera of the mobile device scans the bar-code printed on the passive tag to read the supplier code. Especially for mobile devices which are not capable of reading a passive tag, such as an RFID tag or an NFC tag, the camera of the mobile device can be used for reading the supplier code.

In a possible embodiment the supplier code is read from the integrated chip of the passive tag and at the same time read by the camera of the mobile device which scans the bar-code printed on the passive tag. In this embodiment the two detected supplier codes can be checked for consistency for before the supplier code is sent to the server of the service provider. Accordingly in this embodiment, only if the supplier code detected by the camera by scanning the bar-code is identical with the supplier code read from the integrated chip of the passive tag the mobile device transmits the detected supplier code to the server of the service provider.

In a possible embodiment of the method according to the present invention the service valid message is returned by said server of the service provider to said mobile device if the received supplier code belongs to a registered supplier of the respective service and is then displayed on a display of said mobile device.

In a possible embodiment of the method according to the present invention the service valid message displayed on the display of said mobile device comprises fraud prevention measures such as a screen animation or a turning image.

In a further possible embodiment of the method according to the present invention the valid message displayed on the display comprises service transaction support data.

In a possible embodiment of the method according to the present invention the mobile device sends context information data along with the supplier code to the server.

In a possible embodiment the context information data comprises a user-ID of the user to which the mobile device belongs.

In a further possible embodiment the context information further comprises a coupon-ID.

In a further possible embodiment of the method according to the present invention the context information data comprises also position data indicating a momentary position of the mobile device,
type data indicating a type of said mobile device and time data indicating a current time at the point of sale.

In a possible embodiment of the method according to the present invention the server of the service provider returns a service valid message to the mobile device only if the received user-ID indicates that the user of the mobile device is allowed to perform the respective service transaction.

The invention further provides a system for providing a service transaction comprising the features of claim 13.

The invention provides a system for providing service transactions, said system comprising:
supplier tags each providing an individual supplier code, wherein said supplier tags are located at the points of sale of suppliers,
a server of a service provider to which mobile devices of users are connectable via a network,
wherein the mobile device of a user is adapted to send a supplier code read from a supplier tag to the server of said service provider which returns a service valid message to said mobile device if the supplier code belongs to a registered supplier of the service,
wherein in response to the service valid message received by said mobile device a corresponding service transaction of the service is performed at the point of sale of the registered supplier.

In a possible embodiment of the system according to the present invention the service transaction is a coupon redemption transaction requiring a physical presence of the user's mobile device at the point of sale.

In a further possible embodiment of the system according to the present invention the supplier tag is a passive tag positioned at the physical location where the respective service transaction is performed.

In a possible embodiment of the system according to the present invention the passive tag is formed by a sticker attached to a cash desk at the point of sale (POS), said sticker comprising
an integrated chip storing said supplier code and/or a bar-code representing said supplier code printed on said sticker.

Then invention is also directed to a method for proving a physical presence of a user at a physical location comprising: sending an individual code read by a mobile device of said user from a tag located at the location to a server, returning a valid message by said server to said mobile device if the code belongs to a registered location; and triggering a transaction at the location in response to the valid message received by said mobile device.

In the following possible embodiments of the method and system for providing a service transaction for a mobile device of a user according to the present invention are described in more detail with respect to the enclosed figures.
- Fig. 1: shows a block diagram for illustrating a possible embodiment of a system for providing a service transaction according to the present invention;
- Fig. 2: shows a further diagram for illustrating a possible embodiment of a system for providing service transactions according to the present invention;
- Fig. 3: shows a flow chart of a possible embodiment of a method for providing a service transaction according to the present invention;
- Fig. 4: shows a signal diagram for illustrating a possible embodiment of a method for providing a service transaction according to the present invention.

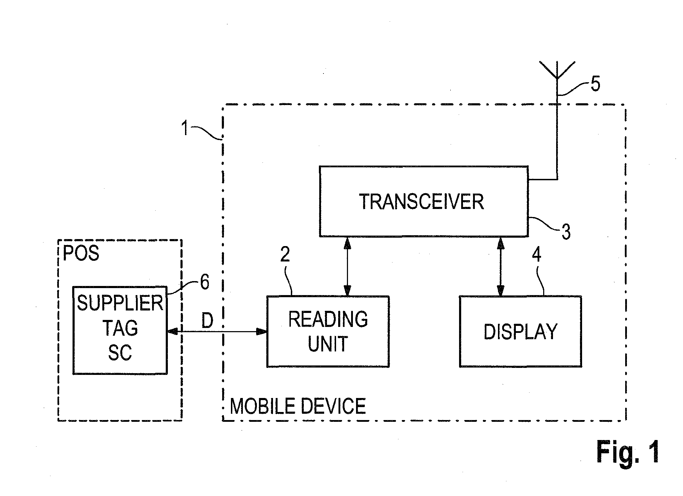

As can be seen in fig. 1 a mobile device 1 as used by the method according to the present invention comprises a reading unit 2 connected to a transceiver 3 and a display 4. The mobile device 1 comprises an antenna 5 connected to the transceiver 3 providing a wireless link, for example to a base station of a network such as a mobile phone network. The reading unit 2 of the mobile device 1 is adapted to read a supplier code SC from a supplier tag 6 located at the point of sale POS of a supplier or merchant. In a possible embodiment the reading unit 2 can comprise a NFC (Near Field Communication) reading unit and can be integrated in the mobile device 1. The near field communication is a short range wireless communication which does typically require a distance between the reading unit 2 and the supplier tag 6 of less than 5 cm. The supplier tag 6 is in a possible embodiment a passive tag positioned at the physical location where a service transaction is to be performed. In a possible embodiment the reading unit 2 generates a carrier field and the supplier tag 6 responds by modulating the existing carrier field. In an embodiment the passive supplier tag also draws its operating power from the provided electromagnetic field. The supplier tag 6 is in this embodiment a passive tag working as a transponder. The supplier tag 6 comprises in a possible embodiment an integrated chip storing a supplier code SC of a supplier or merchant offering services or goods at the point of sale POS. In a possible embodiment the service transaction requires a physical presence of the user or consumer at the point of sale POS. In a possible embodiment the service transaction is for example a coupon redemption transaction requiring the physical presence of the user's mobile device 1 at the point of sale. Because the working distance between the reading unit 2 and the supplier tag 6 is very limited it is guaranteed that the user is present at the point of sale POS where the service transaction such as the coupon redemption is performed. In a possible implementation the supplier tag 6 as shown in fig. 1 can be formed by a sticker attached to a cash desk at the point of sale POS. This sticker can comprise in a possible implementation a bar-code representing the supplier code SC wherein the bar-code is printed on the sticker. In this embodiment the reading unit 2 can also be formed by a camera of a mobile device 1 adapted to detect the bar-code printed on the supplier tag 6. In a possible embodiment the reading unit 2 comprises both, a NFC reading unit for reading the supplier code SC from the integrated chip of the supplier tag and a camera for scanning the bar-code representing the supplier code SC printed on the passive tag 6. Use of NFC tag has the advantage that the set up can be performed very fast and does not require a pairing between the supplier tag 6 and the reading unit 2. With a maximum working distance of less than 20 cm NFC has a very short range so that the mobile device of the user 1 has to be very close to the supplier tag 6 attached to the cash desk at the point of sale POS. Furthermore, the short range reduces the likelihood of an unwanted interception. By using a NFC reading unit 2 the method according to the present invention can be employed also in a crowded area where correlating a signal with the transmitting physical device is difficult.

In an alternative embodiment other short range communication technologies can also be used for reading the supplier code SC from the passive supplier tag 6 such as a RFID reading unit 2 or a Bluetooth reading unit. The distance D between the supplier tag 6 and the reading unit 2 depends on the short range communication technology implemented in the mobile device 1. In a preferred embodiment the maximum working distance D between the supplier tag 6 and the reading unit 2 is less than 20 cm so that the user of the mobile device 1 has to be physical present at the point of sale. For example the user has to touch the supplier tag 6 attached to the cash desk of the point of sale POS. The supplier tag 6 can comprise an integrated chip which can be programmed with data which can be printed directly into a sticker by a manufacturer. In a possible embodiment the sticker can be directly transported to the service provider as an empty NFC tag and a white spot for the QR code. The service provider such as the coupon redemption service provider programs the sticker as an individual POS token with a special NFC write device and can save the POS token in a data base. Furthermore, it is possible that the servicer provider prints a corresponding QR code separately and sticks it on the sticker. The manufactured sticker or supplier tag 6 is shipped by the service provider to the point of sale POS for example by mail. The NFC sticker sent to the supplier or merchant does not require a battery to work. Furthermore, the NFC sticker does not require any technical infrastructure at the point of sale POS. By moving the mobile device 1 within the working distance D of the supplier tag 6 the user can prove his or her presence at the physical location of the point of sale POS.

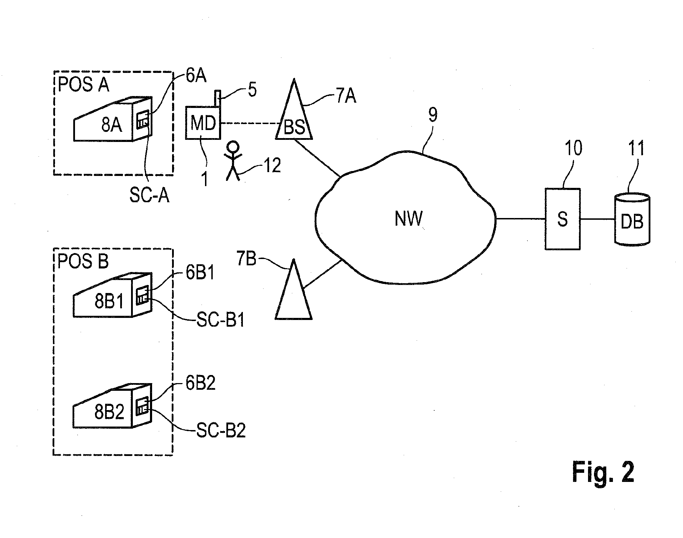

Fig. 2 shows a diagram for illustrating a possible embodiment of a system for providing a service transaction according to the present invention. As can be seen in fig. 2 the mobile device 1 can connect via a wireless link to the base station 7A being within the vicinity of a point of sale POS-A. The point of sale POS-A has a cash desk 8A to which a supplier tag 6A is attached. The base station 7A can be connected via a network 9 or a group of networks to a server 10 of a service provider. The server 10 of the service provider can have access to a data base 11 as shown in fig. 2. A user carrying the mobile device 1 can move the mobile device 1 close to the passive supplier tag 6A to prove his physical presence at the point of sale POS-A as shown in fig. 2. The reading unit 2 of the mobile device 1 reads the supplier code SC-A of the supplier tag 6A and can forward the read supplier code SC-A to the transceiver 3 within the mobile device 1 as shown in fig. 1. The read-out supplier code SC-A of the point of sale POS-A is then transmitted by the transceiver 3 by means of the antenna 5 to the base station 7A and is forwarded via the network 9 to the server 10 of the service provider. The service provider serves 10 checks the received supplier code SC-A to decide whether the received supplier code SC-A belongs to a registered supplier of the respective service. The server 10 checks whether the received token or supplier code SC-A does actually belong to a point of sale POS where the respective service transaction can be performed. For example, the server 10 checks whether the received supplier code actually belongs to a point of sale POS where a selected electronic coupon can be redeemed. In a possible embodiment the server 10 further checks other conditions. In a possible embodiment the mobile device 1 not only sends a supplier code SC read from the attached supplier tag 6 but also context information data CID. The context information data CID can for example comprise a user ID of a user 12. In a further possible embodiment the context information data CID comprises also position data indicating a current position of the mobile device 1. Further it is possible that the context information data CID comprises type data indicating a type of the mobile device 1 such as the respective model of the mobile device 1. The context information data CID can also comprise time data indicating a current time at the point of sale POS. The service transaction is for example a coupon redemption transaction where the context information data CID can comprise a coupon ID of the electronic coupon to be redeemed. If all conditions checked by the server 10 are met the server 10 marks the redemption as valid and send a service valid message SVM back to the mobile device 1. If all or some conditions are not met the server 10 can send an error message to the mobile device 1. The message received by the mobile device 1 can be displayed on the display 4 of the mobile device 1. In a possible implementation the service valid message SVM displayed on the display 4 of the mobile device 1 comprises also fraud prevention measures such as a screen animation and in particular a turning image. The data can also comprise service transaction support data such as a booking help for the cashier providing for instance a bar-code or a message or a manual clearing code.

After having received a service valid message SVM the service transaction of the respective service transaction at the point of sale POS of the registered supplier can be performed in response to the service valid message SVM received by the mobile device 1.

As can be seen in fig. 2 the user 12 can move along with his mobile device 1 to another location and to another point of sale POS-B within the vicinity of the same or of a different base station 7B. As can be seen in fig. 2 the other point of sale POS-B comprises two cash desks 8B-1, 8B-2 each having a passive supplier tag 6B-1, 6B-2 attached. Accordingly, it is possible to have more than one supplier code for each point of sale POS. As shown in the example of fig. 2 for each cash desk 8B-1, 8B-2 of the point of sale POS-B a corresponding supplier code SC-B1, SC-B2 is provided. Accordingly, it can be detected by the server 10 at which cash desk the service transaction such as a coupon redemption transaction has been performed.

If a user 12 tries to redeem an electronic coupon it selects or chooses an electronic coupon EC displayed on the display 4 of its mobile device 1. If the mobile device 1 is a cellphone being NFC enabled the user 12 is invited to tap his cellphone on the supplier tag 6 at the point of sale POS. If the mobile device 1 is not NFC enabled the user is invited to scan the bar-code of the supplier tag 6 printed on the supplier tag sticker attached to the cash desk of the point of sale POS. The reading unit 2 of the mobile device 1 then reads the token or supplier code SC and sends the supplier code SC along with context information data CID to the server 10 of the service provider. If the received supplier code SC belongs to a registered supplier the server 10 then sends a service valid message SVM back to the mobile device 1 along with a booking help. This booking help can be displayed together with the service valid message SVM on the display 4 of the mobile device 1. The booking help can for example comprise a manual clearing code.

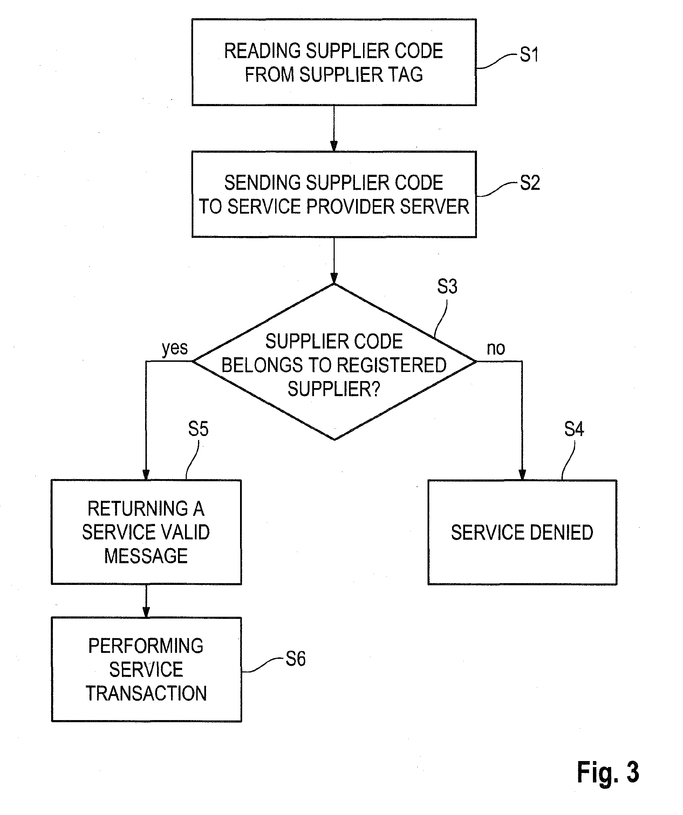

Fig. 3 shows a flowchart of a possible embodiment of a method for providing a service transaction according to the present invention.

In a first step S1 the reading unit 2 of the mobile device 1 reads a supplier code SC from a passive supplier tag 6. This supplier code SC is then sent by the mobile device 1 in step S2 to the service provider 10, for example via a network 9 as shown in fig. 2.

The server 10 decides in step S3 whether the received supplier code belongs to a registered supplier by consulting its data base 11. Further it can be checked whether a selected coupon is offered by the respective supplier. If the supplier code SC does not belong to a registered supplier or the selected coupon is not valid the requested service is denied in step S4 and a corresponding error message can be sent to the mobile device 1 of the user 12. In contrast, if the supplier code SC belongs to a registered supplier and the selected coupon is valid the server 10 returns a service valid message SVM in step S5 to the mobile device 1. The service transaction such as a coupon redemption is then performed in step S6.

In a possible embodiment the service transaction is performed automatically in return to the received service valid message SVM. In an alternative embodiment the service transaction is performed after the service valid message SVM has been displayed on a display 4 of the mobile device 1 thus triggering an action of a person such as the user 12 or a person working at the point of sale (POS).

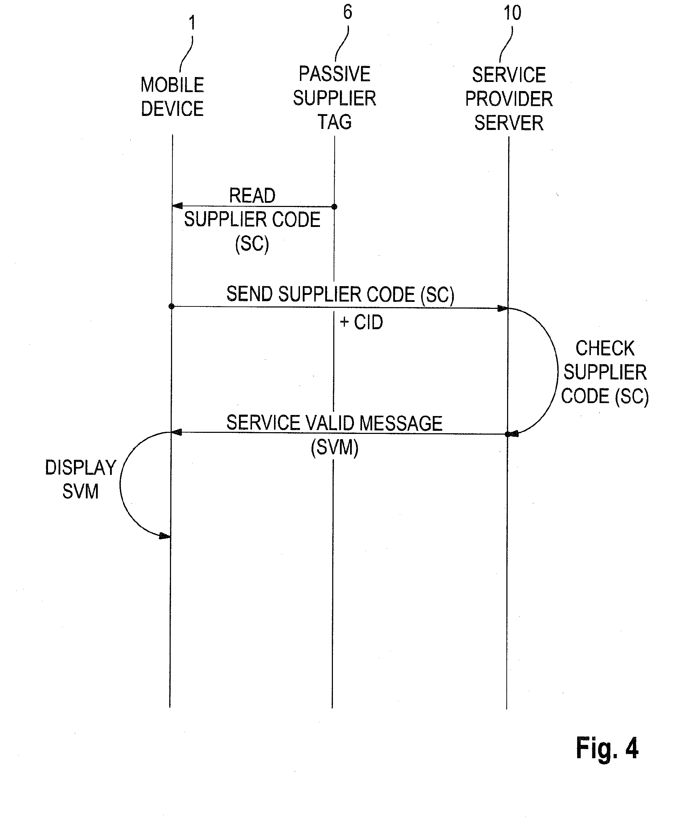

Fig. 4 shows a signal diagram for illustrating a possible embodiment of a method for providing a service transaction according to the present invention. The mobile device 1 reads a supplier codes SC from a passive supplier tag 6. In a possible embodiment the supplier code SC is pulled by the mobile device 1 from the passive supplier tag 6. In an alternative embodiment the supplier code SC can also be pushed by the supplier tag 6 to the mobile device 1. Having received the supplier codes SC the mobile device 1 forwards the received supplier code SC via a network to the service provider server 10 as shown in fig. 4. In a possible implementation the mobile device 1 can first perform a consistency check of the supplier code before sending the supplier code SC to the service provider server 10. Furthermore, the mobile device 1 can also send further information and context data along with the supplier code SC to the service provider server 10. The service provider server 10 then checks the received supplier code SC by comparing the received supplier code SC with supplier codes stored in the data base 11. If the received supplier code SC belongs to a registered supplier the service provider server 10 can send a service valid message SVM to the mobile device 1. This service valid message SVM can be displayed on a display 4 of the mobile device 1. Further, a service transaction can be performed in response to the received service valid message SVM received by the mobile device 1. In a possible embodiment this service transaction is performed automatically in response to the service valid message SVM. In an alternative embodiment the received service valid message displayed on the display 4 of the mobile device 1 triggers action of the user 12 of the mobile device 1 or by a salesperson working at the point of sale POS. With the method according to the present invention it is possible that a user 12 can prove his personal presence at a specific physical location such as a point of sale POS.

The method according to the present invention is generally related to a method for proving a physical presence of a user at a specific physical location. This method comprises the steps of:
sending an individual code read by a mobile device of said user 12 from a tag 6 located at the location to a server 10,
returning a valid message by said server 10 to said mobile device 1 if the code belongs to a registered location and
performing a transaction at the location in response to the service valid message SVM received by the mobile device 1.

Strictly spoken, the method does not prove the physical presence of a user 12 but proves the physical presence of the mobile device 1 of the respective user 12 at a specific physical location. However, if the mobile device 1 is linked to the user 12 for instance by biometric identification methods it is in fact possible to prove the physical presence of the user 12 at the respective physical location where the passive tag 6 is located. For example, if the mobile device 1 comprises a sensor for detecting a biometric feature of the user 12 at the time when the code is read by the mobile device 1 from the passive tag 6 the physical presence of the user 12 at the respective physical location such as the point of sale POS is proven. In this embodiment the mobile device 1 as shown in fig. 1 further comprises a biometric sensor verifying that the registered user 12 moves the mobile device 1 close to the supplier tag 6. This embodiment offers further applications for method according to the present invention such as verifying that a specific person 12 is at a specific time at a specific physical location. For example, a person or user 12 which is not allowed to leave a certain area such as a building or a city can prove in this way that he does not leave the area by touching passive supplier tags 6 located in the respective area. In the same manner a user 12 can prove his physical absence from another physical location. The system according to the present invention is easy to implement since it does not require any complex technical infrastructure at the respective physical locations but only passive supplier tags 6 such as stickers which can be attached to any device or building. The passive supplier tag 6 does not require any power supply and can be attached in any environment. The passive supplier tag 6 for example can even be attached under water as long as a mobile device 1 is also water resistant. In the embodiment as shown in fig. 2 the mobile device 1 is connected to the server 10 via a base station and a network. In an alternative embodiment the mobile device 1 can also connect directly to a server 10 comprising a transceiver. For example, the mobile device 1 can also communicate with the server 10 via satellite or radio transmission.

## Claims

1. A method for providing a service transaction for a mobile device (1) of a user (12) at a point of sale (POS) of a supplier,
the method comprising the steps of:
(a) sending (S2) by said mobile device (1) an individual supplier code (SC) read (S1) by said mobile device (1) from a supplier tag (6) located at the point of sale (POS) of said supplier to a server (10) of a service provider;
(b) returning (S5) a service valid message (SVM) by said server (10) of said service provider to said mobile device (1) if the supplier code (SC) belongs to a registered supplier of the respective service; and
(c) triggering (S6) a service transaction of the respective service at the point of sale (POS) of the registered supplier in response to the service valid message (SVM) received by said mobile device (1).

2. The method according to claim 1,
wherein the service transaction is a coupon redemption transaction requiring a physical presence of the user's mobile device (1) at the point of sale (POS).

3. The method according to claim 1 or 2,
wherein the supplier tag (6) comprises a passive tag (6) positioned at the physical location where the respective service transaction is performed.

4. The method according to claim 3,
wherein said passive tag (6) is formed by a sticker attached to a cash desk (8) at the point of sale (POS).

5. The method according to claim 3 or 4,
wherein said passive tag (6) comprises an integrated chip storing said supplier code and/or
a bar-code representing said supplier code (SC), wherein said bar-code is printed on said passive tag (6).

6. The method according to claim 5,
wherein the mobile device (1) is moved by the user (12) manually close to the passive tag (6) to read the supplier code (SC) from the integrated chip of the passive tag (6) located at the point of sale (POS).

7. The method according to claim 5,
wherein a camera of the mobile device (1) scans the bar-code printed on said passive tag (6) to read the supplier code (SC).

8. The method according to one of the preceding claims 1 to 7,
wherein the service valid message (SVM) is displayed on a display (4) of said mobile device (1) to trigger an action of a person or to trigger automatically the performance of the service transaction.

9. The method according to claim 8,
wherein the service valid message (SVM) displayed on said display (4) of said mobile device (1) comprises fraud prevention measures and service transaction support data.

10. The method according to one of the preceding claims 2 to 9,
wherein the mobile device (1) sends context information data (CID) along with said supplier code (SC) to said server (10), wherein the context information data (CID) comprises:
• a user ID of a user,
• a coupon ID of an electronic coupon,
• position data indicating a current position of said mobile device (1),
• type data indicating a type of said mobile device (1) and
• time data indicating a current time at the point of sale (POS).

11. The method according to claim 10,
wherein the server (10) of said service provider returns a service valid message (SVM) to said mobile device (1) only if the received user-ID indicates that the user (12) of said mobile device (1) is allowed to perform the respective service transaction.

12. A system for providing service transactions,
said system comprising:
supplier tags (6) each providing an individual supplier code (SC),
wherein said supplier tags (6) are located at the points of sale (POS) of suppliers; and
a server (10) of a service provider to which mobile devices (1) of users (12) are connected via a network (9),
wherein the mobile device (1) of a user (12) is adapted to send a supplier code (SC) read from a supplier tag (6) to the server (10) of said service provider which returns a service valid message (SVM) to said mobile device (1) if the supplier code (SC) belongs to a registered supplier of the service,
wherein in response to the service valid message (SVM) received by said mobile device (1) a corresponding service transaction of the service is triggered at the point of sale (POS) of the registered supplier.

13. The system according to claim 12,
wherein the service transaction is a coupon redemption transaction requiring a physical presence of the user's mobile device (1) at the point of sale (POS).

14. The system according to claim 12 or 13,
wherein said supplier tag (6) is a passive tag positioned at the physical location where the respective service transaction is performed.

15. The system according to claim 14,
wherein said passive tag (6) is formed by a sticker attached to a cash desk (8) at the point of sale (POS), said sticker comprising an integrated chip storing said supplier code (SC) and/or a bar-code representing said supplier code (SC) printed on said sticker.
